(19) **Europäisches Patentamt European Patent Office Office européen des brevets**

(11) **EP 1 898 600 B1**

(12) **EUROPEAN PATENT SPECIFICATION**

(45) Date of publication and mention
of the grant of the patent:
**09.01.2013 Bulletin 2013/02**

(51) Int Cl.:
*H04L 29/08* (2006.01)    *H04L 29/06* (2006.01)

(21) Application number: **07115121.1**

(22) Date of filing: **28.08.2007**

(54) **Method for assigning multimedia data to distributed storage devices**

Verfahren zur Zuweisung von Multimediadaten an verteilte Speichervorrichtungen

Procédé d'attribution de données multimédia à des dispositifs de stockage distribués

(84) Designated Contracting States:
**DE FR GB**

(30) Priority: **05.09.2006 EP 06120136**
**22.12.2006 EP 06301290**

(43) Date of publication of application:
**12.03.2008 Bulletin 2008/11**

(73) Proprietor: **Thomson Licensing**
**92130 Issy-les-Moulineaux (FR)**

(72) Inventors:
• **Massoulie, Laurent**
**92210 SAINT-CLOUD (FR)**
• **Neumann, Christoph**
**75015 PARIS (FR)**
• **Champel, Mary-Luc**
**35220 Marpiré (FR)**

(74) Representative: **Lindemann, Robert et al**
**Deutsche Thomson OHG**
**European Patent Operations**
**Karl-Wiechert-Allee 74**
**30625 Hannover (DE)**

(56) References cited:
**EP-A- 1 633 112      US-A1- 2006 174 063**

• **LEE J Y B ET AL: "Design and analysis of a fault-tolerant mechanism for a server-less vide -on-demand system" PARALLEL AND DISTRIBUTED SYSTEMS, 2002. PROCEEDINGS. NINTH INTERNATIONAL CONFERENCE ON 17-20 DEC. 2002, PISCATAWAY, NJ, USA,IEEE, 17 December 2002 (2002-12-17), pages 489-494, XP010628948 ISBN: 0-7695-1760-9**
• **MITZENMACHER M: "Digital fountains: a survey and look forward" INFORMATION THEORY WORKSHOP, 2004. IEEE SAN ANTONIO, TX, USA 24-29 OCT. 2004, PISCATAWAY, NJ, USA,IEEE, 24 October 2004 (2004-10-24), pages 271-276, XP010776150 ISBN: 0-7803-8720-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

The present invention pertains to the field of content distribution in communication networks.

## BACKGROUND OF THE INVENTION

The invention more particularly relates to a method for assigning parts of multimedia files to distributed storage devices to allow efficient multimedia playback of any multimedia file from any device. It assumes that a shared communication channel is available, e.g. devices have WIFI interfaces and are within communication range. The shared communication channel could for instance be a broadcast channel.

With various systems of storage devices that cooperate to allow each device to access multimedia content, reliability is, in the prior art, for example in XP010628948, accomplished by increasing reliability on each device and not on the entire system seen globally. The present invention relies on the presence of a shared communication channel between devices so as to bring additional reliability to the system. Reliability is considered with respect to device failures. Unlike in systems of the prior art, quality of service requirements, minimizing occurrences of degraded playback experience, are taken into account in the present invention.

## SUMMARY OF THE INVENTION

An aim of the present invention is to propose a method, as disclosed in the appended claims, to distribute encoded parts of each multimedia file to ensure pre-specified reliability guarantees of the system in the presence of device failures, and to assign additional, not necessarily encoded parts of the multimedia files, to devices to ensure that a maximal number of concurrent devices can simultaneous play back distinct multimedia files. This will exploit knowledge of the popularity of distinct multimedia files, if information on such popularity is available.

>

The technical problem the present invention seeks to solve is the following: how to distribute data from multimedia files on distributed storage devices so that, using a shared communication channel, devices can efficiently playback stored multimedia files, even in the presence of failures of a fraction of the devices?

The present invention is defined, in its broader sense, in claim 1.
Advantageous embodiments are presented in the dependent claims.

A method is presented for achieving the desired placement of data to devices with minimal use of the shared communication channel and maximal quality of service for playback.

Other aspects of the present invention include:

i) a scheme for using the shared communication channel during playback operation; and
ii) a scheme for managing storage on devices during playback operation.

## BRIEF DESCRIPTION OF THE DRAWINGS

The following detailed description will be better understood with the drawings, in which:

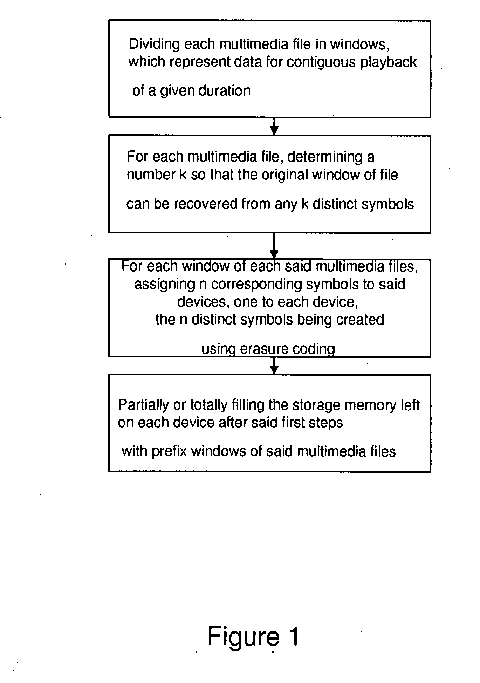

- Figure 1 shows the steps of the method according to the present invention ;

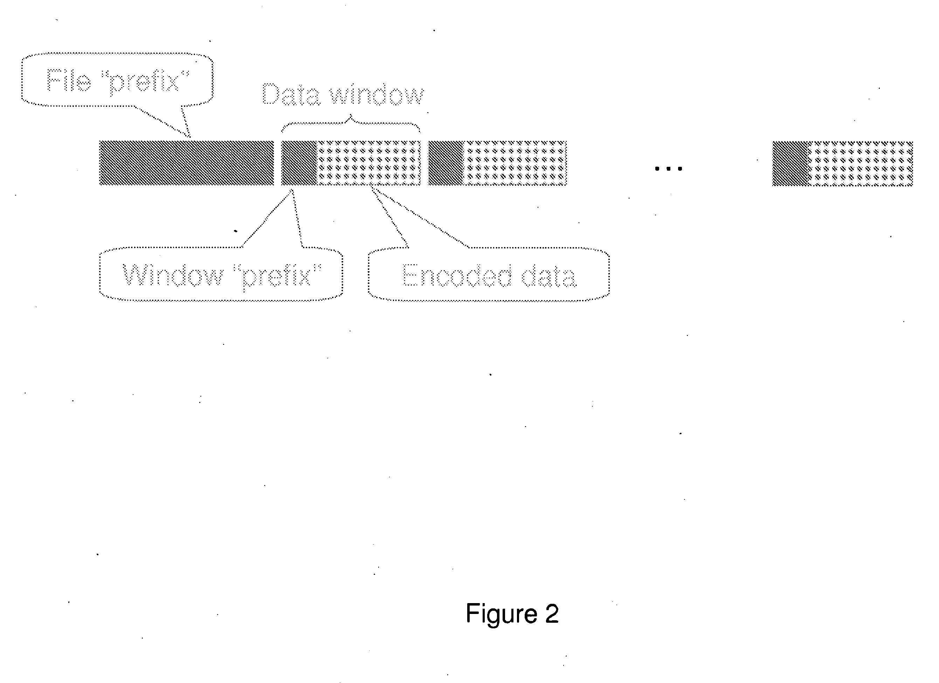

- Figure 2 represents a file and windows according to the present invention ;
- Figure 3 illustrates windows according to the present invention ;
- Figure 4 shows the state of the memory of a device according to the method of the present invention ;
- Figure 5 represents per movie data: prefix windows and encoded data according to the present invention ; and
- Figure 6 illustrates prefix windows during playback according to the present invention.

## DETAILED DESCRIPTION

We first assume that each multimedia file is divided in windows, each window representing data for contiguous playback of a given duration.

This desired placement of parts of files comprises two main steps.
In a first step (also referred to below as "Phase 1"), a fixed fraction of each file that needs to be placed on each device is determined. This fraction is selected to meet a particular local reliability target. The details are as follows.
It is assumed that the failure probability of each device is known, and denote it by p. It is also assumed that a maximum probability of loosing a particular file f is given, and denote it by **p(f)**. We let n denote the total number of devices that can communicate via the shared communication channel. We then determine the "decoding number" **k(f)** of file f as follows. It is chosen as the largest integer k such that the probability that a Binomial random variable with parameters (**n,p**) exceeds the integer n-**k** is not larger than the target reliability probability p(f). In other words, it is the largest integer **k** in {0,...,n} so that the following inequality holds:

$$\sum_{i=n-k+1}^{n} p^i \left(1 - p\right)^{n-i} \binom{n}{i} \leq p(f).$$

We assume that multimedia files are separated into so-called windows that represent data for contiguous playback of a given duration (e.g. one second).

Once **k**(**f**) is determined, one form of erasure coding is used so that for each specified window of multimedia file **f**, **n** distinct symbols are created, so that the original window of file can be recovered from any **k**(**f**) distinct symbols. Then for each window of the file, the **n** corresponding symbols are assigned one to each device. Such erasure codes are very common in the literature, codes such as Low Density Parity Check Codes (LDPC), Raptor Codes (RC) or Reed-Solomon codes (RS) are all examples of the erasure codes that could be used in this phase. This operation is repeated for each window of file **f**, and then for each file in the collection to be stored.

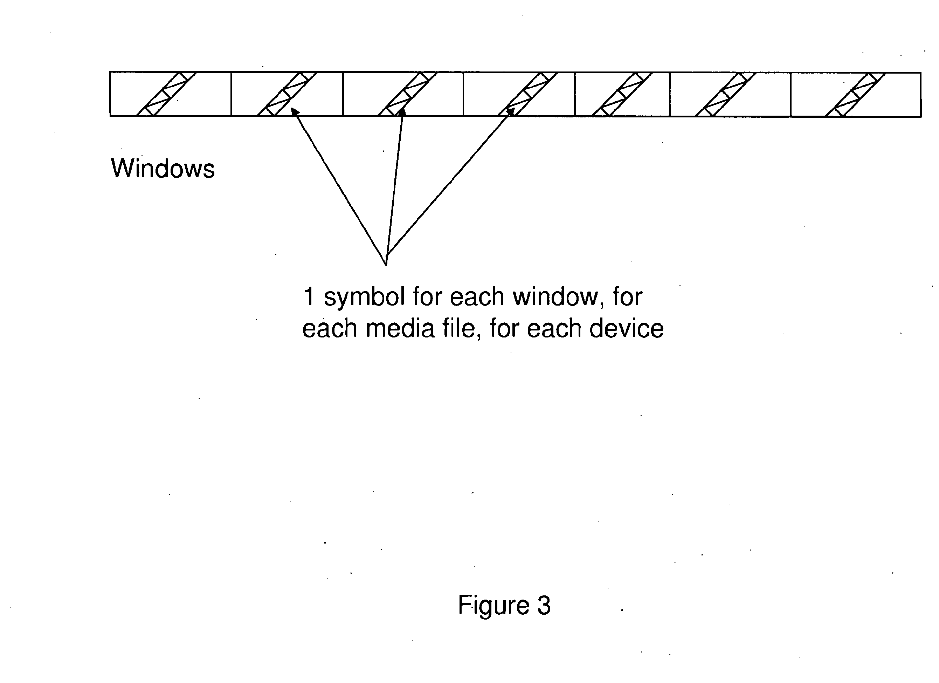

Figure 3 represents, according to the present invention, a file comprising windows, where there is one symbol for each window, for each media file, for each device. This Figure represents those symbols unique to a given file and a given device. Each window of each file f can be reconstructed from any collection of k(f) distinct symbols relative to this file and this window.

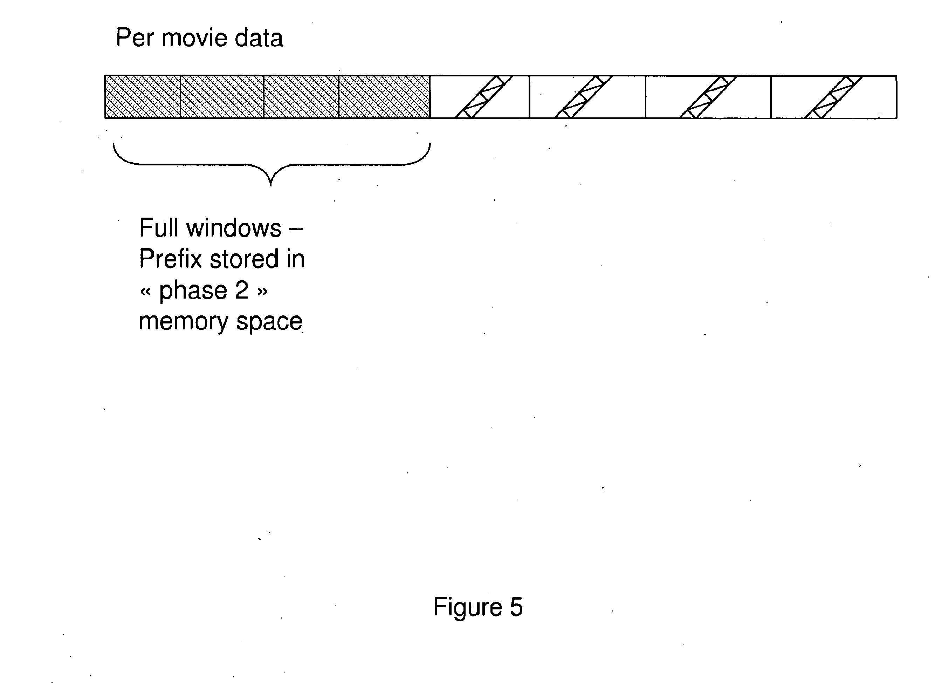

The memory space that is left available on each device will be used to store additional parts of the files, to optimize the quality of playback. We chose to store prefixes of movies that are contiguous collections of windows starting with the first window of the movie (see Figure 5). The reason for this choice is that a prefix is needed to start playback.

The second step (also referred to below as "Phase 2") is pursued as follows. One determines the storage memory left on each device at the end of phase 1. For each device, one determines the size of file **f**, that we denote by **S**(**f**), to be stored on the device. [We assume for simplicity that this size is device-independent; extensions may handle device-dependent sizes, which are useful for instance when devices have distinct storage memories]. These sizes **S**(**f**) are chosen to minimize the probability that for any given file f, playback events of file f are either delayed or interrupted.

To be more specific, we need to specify the scheduling strategy used to do playback when multiple playbacks take place.

We thus consider the following scheduling strategy. Any device **d** involved in a playback determines its lead time, denoted by **T**(**d**), that is the time until it will stop being able to playback if it doesn't get additional data via the shared communication channel. The shared communication channel then sends in priority the next data window required for playback by the device **d** with the smallest lead time **T**(**d**) among all lead times. This is an instance of the so-called Earliest-Deadline-First scheduling strategy, which is known to have desirable optimality properties [see e.g. LeBoudec and Thiran, "Network Calculus, a theory of deterministic queueing systems for the Internet", Springer Verlag, 2001].

Under such scheduling strategy, we assume that the additional data **S**(**f**) from file **f** stored on any device is in fact a prefix of file f, that is the first **S**(**f**) data windows in playback order. To fully specify the values **S**(**f**), we assume that the following information is available: the frequency at which any device will access file **f**, denoted by •(**f**). Then we determine the sizes **S**(**f**) as follows. Denote by **fail**(**f**) the frequency at which requests to playback file **f** have to be delayed, in order not to interrupt ongoing requests, and under the Earliest-Deadline-First scheduling policy just described. We choose **S**(**f**) so that the largest value of **fail**(**f**) is minimized, under the constraints that

$$\sum_f S(f) \le M$$

where **M** is the memory space remaining in a given device for all files after the end of phase 1. We note that no closed form expressions exist for the values of **fail**(**f**) under standard assumptions on requests; we propose to evaluate these either via simulation, or via the use of approximate formulas available in the literature [notably, heavy-traffic approximations of the performance of earliest-deadline-first schedulers are available; see for instance ref. "Service-Differentiation for Delay-Sensitive Applications: An Optimisation-Based Approach", by Peter Key, Laurent Massoulié and Jonathan Shapiro, in Proceedings of IFIP Performance 2002 Conference.]

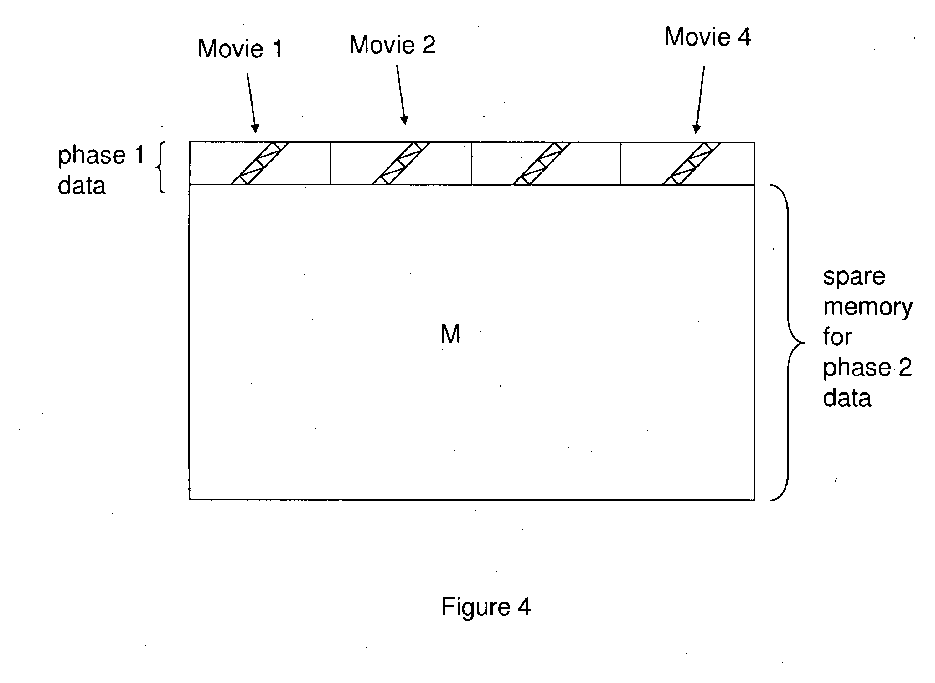

Figure 4 represents the memory space in a given device, where phase 1 data can be found for movies (files) 1, 2, 3 and 4 and where M is the spare memory space for phase 2 data.

Figure 5 illustrates data per movie: prefix windows and phase 1 encoded data.

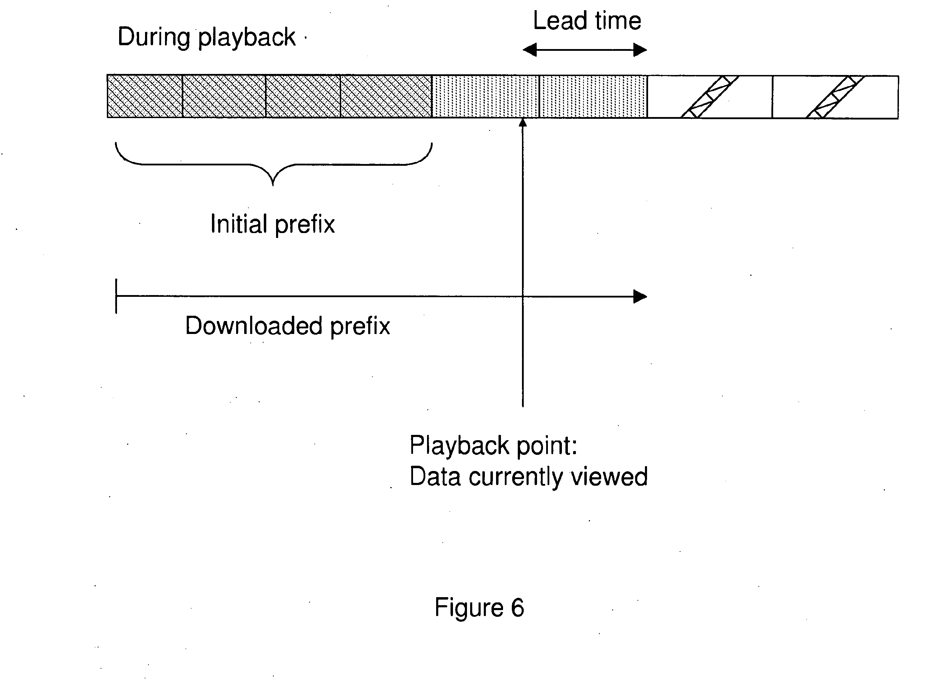

Figure 6 illustrates, according to the present invention, prefix windows during playback. In particular, there is a first set of windows, called the initial prefix, which constitutes "phase 2 data" relative to this file. There is then a number of other contiguous windows which have been downloaded after playback has started. Among these, one distinguishes between data that has already been played back and data that is still due to playback. The amount of such data that is still due to playback determines the "lead time", that is the time until playback interruption if the device does not obtain additional data.

A novelty of the above-described ideal file placement strategy is that it combines erasure-encoded data placement with not necessarily encoded data placement to jointly optimize i) reliability, and ii) quality of service, measured in terms of delayed playbacks.

One other advantage of the approach is that no particular care is needed in selecting from which device data needs to be retrieved. Indeed a random selection of sufficiently many devices will do.

Another important aspect of the method concerns the management of storage during playback. We propose to overwrite Phase 2-data from files not currently being played back by downloaded data from the file currently being played back, and this on any device. We would not allow to overwrite Phase 1-data so that the reliability is not affected. During idle periods, the device can then recover data that has been overwritten during playback from other devices. This would take place at the lowest possible priority. [Alternatively, we may save some memory that is used only to buffer data due to be played back, while not overwriting any of the original data assignment.]

The overwriting of data can advantageously be performed by exploiting the popularity of the multimedia files (movies for instance). A commercial blockbuster popular movie would not be overwritten, whereas a more confidential movie could be overwritten.

Another aspect of the method concerns how the placement is effectively done in practice, once the two critical parameters, that is $k(f)$, and $S(f)$, have been determined for each file. We suggest the following approach. The shared communication channel is used to broadcast each file. During the broadcast of a given file $f$, any device stores the desired prefix of size $S(f)$; beyond this prefix, it creates window-by-window the encoded data it will keep for file f. This can be done by locally generating at random erasure codes.

Alternatively, in another embodiment of the invention, a more efficient approach would consist in broadcasting the original files augmented with a first stage of erasure codes, and let devices generate random codes say according to Luby's LT coding scheme from all these inputs, so that the codes stored on the devices are in fact Raptor codes [see IETF draft, "Raptor Forward Error Correction Scheme for Object Delivery", M. Luby, 2006-6-23].

More generally any fountain code, such as LT, Raptor codes, or LDPC, can be used for this embodiment.

One context of interest is that of In-Flight Entertainment, where devices are assigned to plane seats, and groups of seats communicate using WIFI. In that context, the ultimate goal is to allow high-performance video-on-demand from any seat.

Another context of interest is that of a distributed storage system where in an entire network, the content is distributed all over the network. Such a system actually adds reliability since content is not only present in several places but will also be copied temporarily to new locations where it needs to be locally accessed.

The above specification, examples and drawings provide a complete description of the method according to the present invention. Since many embodiments of the invention can be made without departing from the scope of the invention, the invention resides in the claims herein after appended.

**Claims**

1. Method for assigning parts of multimedia files to distributed storage devices, the number of said storage devices being an integer n, the method comprising the steps of:

   (a) dividing each multimedia file f into windows, which represent data for contiguous playback of the respective multimedia file f of a given duration ;
   (b) for each multimedia file f, determining a number k(f) with k < n so that any window of the multimedia file f can be recovered from any k(f) distinct symbols, the symbols being created using erasure coding in accordance with k(f);
   (c) for each window of each of said multimedia files, creating n distinct symbols using said erasure coding, and storing the n distinct symbols in said storage devices, one in each storage device, ; **characterized by**
   (d) partially or totally filling the storage memory left on each storage device after steps (a), (b) and (c) with at least the first window of the respective one or more multimedia files, wherein said at least first window is not coded using erasure coding, and said at least first window represents prefix needed to start playback of the respective one or more multimedia files.

2. Method according to claim 1 **characterized in that** said method further comprises the step of broadcasting each multimedia file.

3. Method according to claim 1 or 2 **characterized in that** the number k(f)of a multimedia file to be stored on a storage device, is chosen in accordance with the probability of failure of a storage device storing a distinct symbol of a multimedia file.

4. Method according to one of the preceding claims **characterized in that** data corresponding to step (d) from multimedia files not being played back are overwritten by downloaded data from a multimedia file being played back.

5. Method according to claim 2 **characterized in that**, during the broadcast of a multimedia file, any storage device stores a desired prefix having a size, which is equal to the size of the multimedia file to be stored on this storage device, and **in that**, beyond this prefix, it creates window-by-window the encoded data it will keep for the multimedia file to be stored.

6. Method according to claim 2 **characterized in that** original multimedia files augmented with a first stage of erasure codes are broadcasted, and **in that** the storage devices generate random codes.

7. Method according to any of the preceding claims **characterized in that** step (d) is performed using indications of the popularity of said multimedia files.

## Patentansprüche

1. Verfahren zum Zuweisen von Teilen von Multimediadateien zu verteilten Ablagevorrichtungen, wobei die Anzahl der Ablagevorrichtungen eine ganze Zahl n ist, wobei das Verfahren die folgenden Schritte umfasst:

> (a) Aufteilen jeder Multimediadatei f in Fenster, die Daten für die zusammenhängende Wiedergabe der jeweiligen Multimediadatei f mit einer gegebenen Dauer repräsentieren;
> (b) für jede Multimediadatei f Bestimmen einer Anzahl k(f) mit k < n in der Weise, dass irgendein Fenster der Multimediadatei f aus irgendwelchen k(f) unterschiedlichen Symbolen wiedergewonnen werden kann, wobei die Symbole unter Verwendung einer Löschcodierung in Übereinstimmung mit k(f) erzeugt werden;
> (c) für jedes Fenster jeder der Multimediadateien Erzeugen von n unterschiedlichen Symbolen unter Verwendung der Löschcodierung und Speichern der n unterschiedlichen Symbole in den Ablagevorrichtungen, eines in jeder Ablagevorrichtung; **gekennzeichnet durch**
> (d) teilweises oder vollständiges Füllen des Ablagespeichers, der in jeder Ablagevorrichtung nach den Schritten (a), (b) und (c) verblieben ist, mit mindestens dem ersten Fenster der jeweils einen oder mehreren der Multimediadateien, wobei das mindestens erste Fenster nicht unter Verwendung der Löschcodierung codiert wird und das mindestens erste Fenster ein Präfix repräsentiert, das zum Beginnen der Wiedergabe der jeweils einen oder mehreren der Multimediadateien notwendig ist.

2. Verfahren nach Anspruch 1, **dadurch gekennzeichnet, dass** das Verfahren ferner den Schritt des Rundsendens jeder Multimediadatei umfasst.

3. Verfahren nach Anspruch 1 oder 2, **dadurch gekennzeichnet, dass** die Anzahl k(f) einer in einer Ablagevorrichtung zu speichernden Multimediadatei in Übereinstimmung mit der Wahrscheinlichkeit des Ausfalls einer Ablagevorrichtung, die ein charakteristisches Symbol einer Multimediadatei speichert, gewählt wird.

4. Verfahren nach einem der vorhergehenden Ansprüche, **dadurch gekennzeichnet, dass** dem Schritt (d) entsprechende Daten von Multimediadateien, die nicht wiedergegeben werden, durch heruntergeladene Daten von einer Multimediadatei, die wiedergegeben wird, überschrieben werden.

5. Verfahren nach Anspruch 2, **dadurch gekennzeichnet, dass** irgendeine Ablagevorrichtung während der Rundsendung einer Multimediadatei ein gewünschtes Präfix mit einer Größe speichert, die gleich der Größe der in dieser Ablagevorrichtung zu speichernden Multimediadatei ist, und dass sie über dieses Präfix hinaus von Fenster zu Fenster die codierten Daten erzeugt, die sie für die zu speichernde Multimediadatei behält.

6. Verfahren nach Anspruch 2, **dadurch gekennzeichnet, dass** die ursprünglichen Multimediadateien, erweitert mit einem ersten Abschnitt von Löschcodes, rundgesendet werden und dass die Ablagevorrichtungen Zufallscodes erzeugen.

7. Verfahren nach einem der vorhergehenden Ansprüche, **dadurch gekennzeichnet, dass** der Schritt (d) unter Verwendung von Angaben der Beliebtheit der Multimediadateien ausgeführt wird.

## Revendications

1. Procédé d'attribution de parties de fichiers multimédia à des dispositifs de stockage distribués, le nombre desdits dispositifs de stockage étant un entier n, le procédé comprenant les étapes suivantes :

> (a) division de chaque fichier multimédia f en des fenêtres, représentant des données pour la lecture contiguë du fichier multimédia f respectif d'une durée donnée ;
> (b) pour chaque fichier multimédia f, détermination d'un nombre k (f) avec k < n de sorte que n'importe quelle fenêtre du fichier multimédia f puisse être récupérée à partir de symboles distincts k (f) quelconques, ces symboles étant créés en utilisant des codage d'effacement conformes à k(f) ;
> (c) pour chaque fenêtre de chacun desdits fichiers multimédia, création de n symboles distincts utilisant ledit codage d'effacement, et stockage des n symboles distincts dans lesdits dispositifs de stockage, un dans chaque dispositif de stockage ; **caractérisé par**
> (d) remplissage partiel ou total de la mémoire de stockage restant sur chaque dispositif de stockage après les étapes (a), (b) et (c) avec au moins la première fenêtre du ou des fichiers multimédia respectifs, dans lequel ladite première fenêtre au moins n'est pas codée via le codage d'effacement, et ladite première fenêtre au moins représente un préfixe nécessaire pour démarrer la lecture du ou des fichiers multimédias respectifs.

2. Procédé selon la revendication 1 **caractérisé en ce que** ledit procédé comprend en outre l'étape de diffusion de chaque fichier multimédia

3.  Procédé selon la revendication 1 ou 2 **caractérisé en ce que** le nombre k (f) d'un fichier multimédia devant être stocké sur un dispositif de stockage, est choisi en accord avec la probabilité d'échec d'un dispositif de stockage stockant un symbole distinct d'un fichier multimédia.

4.  Procédé selon l'une des revendications précédentes **caractérisé en ce que** les données correspondant à l'étape (d) depuis les fichiers multimédia n'étant pas lus sont écrasées par des données téléchargées d'un fichier multimédia étant lu.

5.  Procédé selon la revendication 2 **caractérisé en ce que**, lors de la diffusion d'un fichier multimédia, n'importe quel dispositif de stockage stocke un préfixe souhaité ayant une taille, qui est égale à la taille du fichier multimédia à stocker sur ce dispositif de stockage, et **en ce que**, au delà de ce préfixe, il crée fenétre-par-fenétre les données encodées qu'il gardera pour le fichier multimédia à stocker.

6.  Procédé selon la revendication 2 **caractérisé en ce que** les fichiers multimédias originaux augmentés avec un premier étage de codes d'effacement sont diffusés, et **en ce que** les dispositifs de stockage génèrent des codes aléatoires.

7.  Procédé selon l'une quelconque des revendications précédentes, **caractérisé en ce que** l'étape (d) est effectuée à l'aide d'indications de la popularité desdits fichiers multimédia.

```
┌─────────────────────────────────────────┐
│ Dividing each multimedia file in windows,│
│ which represent data for contiguous      │
│ playback                                 │
│                                          │
│ of a given duration                      │
└─────────────────────────────────────────┘
                    │
                    ▼
┌─────────────────────────────────────────┐
│ For each multimedia file, determining a  │
│ number k so that the original window of  │
│ file                                     │
│                                          │
│ can be recovered from any k distinct     │
│ symbols                                  │
└─────────────────────────────────────────┘
                    │
                    ▼
┌─────────────────────────────────────────┐
│ For each window of each said multimedia  │
│ files,                                   │
│ assigning n corresponding symbols to said│
│ devices, one to each device,             │
│ the n distinct symbols being created     │
│                                          │
│ using erasure coding                     │
└─────────────────────────────────────────┘
                    │
                    ▼
┌─────────────────────────────────────────┐
│ Partially or totally filling the storage │
│ memory left                              │
│ on each device after said first steps    │
│                                          │
│ with prefix windows of said multimedia   │
│ files                                    │
└─────────────────────────────────────────┘
```

Figure 1

Figure 2

Windows

1 symbol for each window, for
each media file, for each device

Figure 3

Figure 4

Per movie data

Full windows –
Prefix stored in
« phase 2 »
memory space

EP 1 898 600 B1

Figure 5

Figure 6

EP 1 898 600 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. LUBY.** Raptor Forward Error Correction Scheme for Object Delivery. *IETF draft,* 23 June 2006